Europäisches Patentamt

European Patent Office

Office européen des brevets

(11) Publication number: **0 053 724**
**A1**

## (12) EUROPEAN PATENT APPLICATION

(21) Application number: **81109387.1**

(22) Date of filing: **30.10.81**

(51) Int. Cl.³: **F 16 D 55/224**

(30) Priority: **10.12.80 JP 179940/80**

(43) Date of publication of application:
**16.06.82 Bulletin 82/24**

(84) Designated Contracting States:
**DE FR GB**

(71) Applicant: SUMITOMO ELECTRIC INDUSTRIES
LIMITED
No. 15, Kitahama 5-chome Higashi-ku
Osaka-shi Osaka(JP)

(72) Inventor: Yamamoto, Masachika c/o Itami Works of
Sumitomo
Electric Industries, Ltd. 1 Miyahigashi Koya
Itami-shi Hyogo(JP)

(72) Inventor: Iwasaki, Masaaki c/o Itami Works of
Sumitomo
Electric Industries, Ltd. 1 Miyahigashi Koya
Itami-shi Hyogo(JP)

(74) Representative: Glawe, Richard, Dr. Patentanwälte Dr.
Richard Glawe et al,
Dr. Walter Moll, Dipl.-Ing. Klaus Delfs Dr. Ulrich
Mengdehl Dr. Heinrich Niebuhr Postfach 260 162
D-8000 München 26(DE)

(54) Improvement in a disc brake.

(57) In the sliding part of a disc brake a protective member (10) is provided between the bush (3) and the inner wall of the guide hole (2) to prevent the bush from being twisted. The frictional resistance between the guide hole and the protective member is adapted to be smaller than that between the protective member and the bush.

FIG. 2

EP 0 053 724 A1

The present invention relates to a disc brake of a pin sliding type and particularly to the improvement in the sliding part thereof.

With a disc brake of this type having a caliper, a fixed member, a pair of brake pads, and guide pins slidably fitting in guide holes formed in the caliper to support the caliper, it is customary to cover each guide pin with a rubber bush to keep dust off a sliding part around the guide pin. There are two types of bushes; one is adapted to cover the guide pin entirely and the other to cover only the exposed portion of the guide pin. The present invention is applicable to disc brakes using bushes of the former type.

The bush adapted to cover the entire guide pin is apt to fatigue particularly at its middle portion sandwitched between the inner wall of the guide hole and the guide pin because the portion is always under the weight of the caliper of the brake and its inner surface serves as a sliding surface for the guide pin.

The conventional solution to this problem was to give the bush a larger diameter than that of the guide hole and squeeze or tuck the bush into the guide hole, thereby increasing the strength of the portion and minimizing its fatigue. This also increases the frictional resistance between the bush and the inner wall of the guide hole, thus preventing the bush from turning, twisting and getting damaged. However, this solution was not sufficient in the durability of the bush.

An object of the present invention is to provide a disc brake having sliding parts including a bush which has an increased durability.

In accordance with the present invention, a tubular protective member having a greasy outer surface is placed between the bush and the inner wall of the guide hole to decrease the frictional resistance between the bush and the inner wall of the guide hole so that the bush will easily turn when subjected to vibration, unlike the bush in the conventional disc brake. This reduces the possibility of the bush being twisted and getting damaged.

Other features and advantages of the present invention will become apparent from the following description taken with reference to the accompanying drawings, in which:

Fig. 1 is a plan view of a disc brake having the sliding parts in accordance with the present invention;

Fig. 2 is an enlarged sectional view of a portion of the disc brake;

Fig. 3 is a perspective view of an embodiment of a protective member; and

Fig. 4 is an end view of another embodiment thereof.

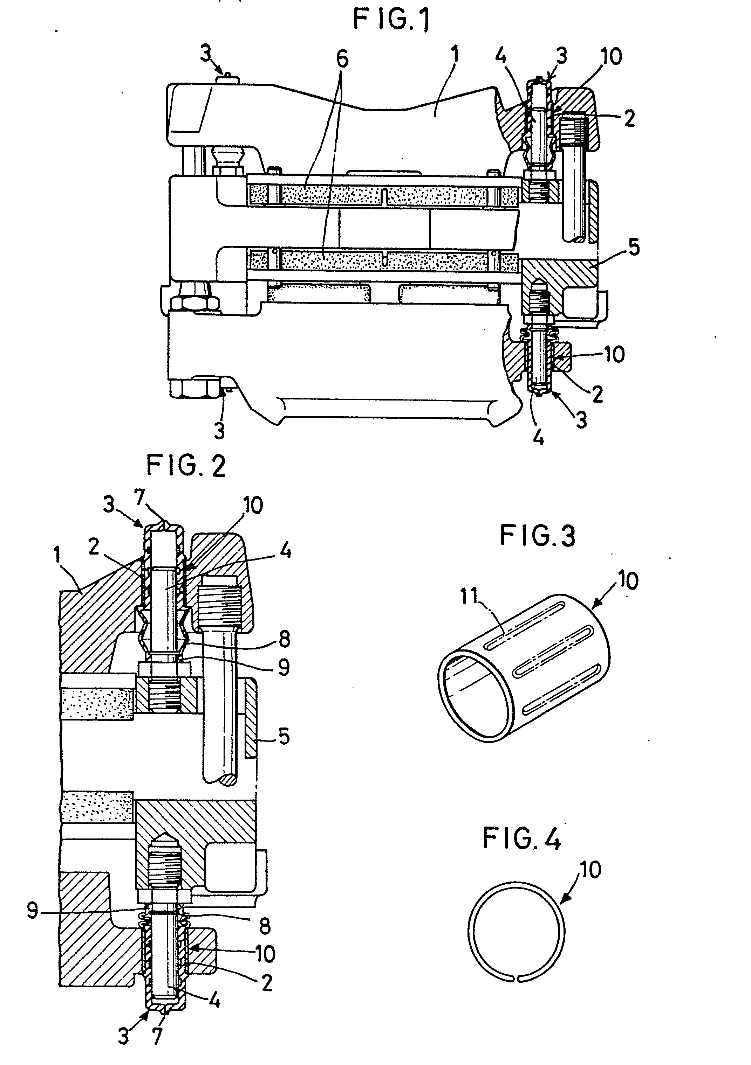

Referring to Fig. 1 showing a disc brake to which the present invention is applied, a caliper 1 is provided with a plurality of guide holes 2 in each of which a bush 3 made of rubber is mounted. Into each of the bushes, a guide pin 4 for supporting the caliper is slidably inserted. One end of the guide pin is screwed into a fixed member 5. The brake shown here uses four guide pins. The numeral 6 designates a brake pad.

The bush 3 is closed at its outer end but is provided with a small air vent 7 there (Fig. 2). The bush has an expandable bellows portion 8 at its inner end. The end 9 of the bush is held on a projection or in an annular groove formed in the guide pin 4.

A tubular protective member 10 for protecting the bush is interposed between the inner wall of the guide hole 2 and the bush 3. The protective member should have a greasy or slippery outer surface. The protective member 10 and the bush 3 can be mounted either by squeezing the upper half of the bush in the protective member and mounting the bush together with the protective member in the guide hole or by firstly mounting the protective member in the guide hole and then squeezing the bush into the protective member.

Because of the provision of the protective member 10 having a greasy outer surface, the bush 3 is liable to turn when subjected to vibration. This is reverse to the case in the conventional disc brake of this type in which the bush was designed so as not to easily turn. Because of the elasticity of the rubber bush forced into the protective member, the frictional resistance between the outer surface of the bush and the inner surface of the protective member is larger than that between the outer surface of the protective member and the inner wall of the guide hole. Therefore, if the bush 3 turns, the protective member, too, will turn together with the bush. In this condition, the entire bush turns in a uniform direction and at a uniform speed. This assures that it can be prevented from being distorted or twisted.

The protective member 10 comprises a sleeve of a metal or a hard or semi-hard synthetic resin (Fig. 3) or a tube of a similar material formed from a plate
(Fig.4). Also, it may comprise a seal of Teflon
(Trademark) tightly wound around the bush 3. If
synthetic resin is used as the material for the bush,
it should preferably have a good heat resistance.

The protective member 10 may have a plurality of
oil grooves 11 in its outer periphery to keep its outer
surface greasy, as shown in Fig. 3 by dotted line.
In addition to the oil grooves, it may have a rugged
surface on its inner surface to increase the frictional
resistance with the outer surface of the bush.

The structure of the sliding part in accordance
with the present invention can be applied to other type
of disc brakes in which guide pins are fixed to the
caliper, not to the fixed member, and guide holes are
formed in the fixed member, not in the caliper.

It will be understood from the foregoing that
with the protective member adapted to turn together with
the bush, the bush can be prevented from being distorted
when subjected to a turning force. Therefore, even if
the bush is subjected to violent vibration, the
possibility of the bush being broken is much less. In
other words, this structure helps to increase the working
life of the bush and the sliding portion of the brake.

What we claim:

1. In a disc brake of a pin-sliding type comprising a caliper, a fixed member, a pair of brake pads, a plurality of guide pins for supporting said caliper, a plurality of bushes mounted in guide holes formed in said caliper or said fixed member and being closed at outer end thereof and expandable at inner end thereof, said guide pins being slidably inserted in said bushes, the improvement wherein there is provided a protective member interposed between the inner wall of said guide hole and said bush, the frictional resistance between said protective member and the inner wall of said guide hole being smaller than that between said bush and said protective member.

2. The disc brake as claimed in claim 1 wherein said protective member is a sleeve or tube of metal or heat-resistant synthetic resin.

3. The disc brake as claimed in claim 2 wherein said protective member is formed with at least one oil groove in the outer periphery thereof.

4. The disc brake as claimed in claim 2 or 3 wherein said protective member is formed with rugged surface in the inner surface thereof.

5. The disc brake as claimed in claim 1 wherein said protective member is a seal wound around said bush.

FIG.1

FIG.2

FIG.3

FIG.4

0053724

## DOCUMENTS CONSIDERED TO BE RELEVANT

| Category | Citation of document with indication, where appropriate, of relevant passages | Relevant to claim |
|---|---|---|
| A | GB - A - 2 028 932 (KELSEY HAYES) | 1 |
| A | GB - A - 2 041 121 (SUMITOMO) | 1 |
| A | FR - A - 2 398 930 (GIRLING) | 1 |
| A | FR - A - 2 142 248 (DBA) | 1 |
| A | FR - A - 2 410 171 (SUMITOMO) | 1 |
| A | GB - A - 1 457 967 (RENAULT) | 1 |

---------

CLASSIFICATION OF THE
APPLICATION (Int. Cl. 3)

F 16 D 55/224

TECHNICAL FIELDS
SEARCHED (Int.Cl. 3)

F 16 D 55/224
55/22
55/02

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,
corresponding document

The present search report has been drawn up for all claims

| Place of search | Date of completion of the search | Examiner |
|---|---|---|
| The Hague | 17-03-1982 | HARTEVELD |

EPO Form 1503.1  06.78